Europäisches Patentamt

European Patent Office

Office européen des brevets

(19)

(11) Publication number : **0 138 838**
**B1**

(12) EUROPEAN PATENT SPECIFICATION

(45) Date of publication of patent specification :
30.12.86

(51) Int. Cl.⁴ : **B 62 D 55/20**

(21) Application number : 84900785.1

(22) Date of filing : 16.01.84

(86) International application number :
PCT/US 84/00058

(87) International publication number :
WO/8403676 (27.09.84 Gazette 84/23)

(54) TRACK JOINT RETAINING APPARATUS.

(30) Priority : 18.03.83 US 476909

(43) Date of publication of application :
02.05.85 Bulletin 85/18

(45) Publication of the grant of the patent :
30.12.86 Bulletin 86/52

(84) Designated contracting states :
BE DE FR GB

(56) References cited :
EP-A- 0 008 959
WO-A-81 /005 45
FR-A- 1 063 621
FR-A- 1 167 081
GB-A- 1 079 769
US-A- 4 084 423
US-A- 4 182 578

(73) Proprietor : CATERPILLAR INC.
100 Northeast Adams Street
Peoria Illinois 61629-6490 (US)

(72) Inventor : GARMAN, James, A.
612 S. Main Street
Eureka, IL 61530 (US)
Inventor : SWIFT, Stephen, D.
Rt. 2, Box 2
Sparland, IL 61565 (US)

(74) Representative : Jackson, Peter Arthur et al
GILL JENNINGS & EVERY 53-64 Chancery Lane
London WC2A 1HN (GB)

Jouve, 18. rue St-Denis. 75001 Paris. France

## Description

This invention relates generally to an endless track for crawler-type vehicles and more particularly to apparatus for retaining a joint of such track.

A track joint is customarily held together by an interference fit between the ends of the track pins and their respective link bores into which the pin ends are received. While a substantial force, sometimes exceeding 60 tons (54.4 metric tons), is typically used to press the links onto their respective pin ends, the links still have a tendency to move outwardly on the pin as a result of forces exerted on the track during operation of the vehicle.

Until recently, the amount of end play which developed in operation was normally within acceptable limits. However, with the introduction of larger crawler vehicles and engines with greater horsepower, even for smaller vehicles, the amount of end play has increased so as to become a concern, especially for sealed and lubricated track. In sealed and lubricated track, excessive end play can lead to a loss of the lubricant and the ingress of abrasive materials which can lead to excessive wear and premature failure of the track.

Various methods have been employed to limit the amount of end play in track joints. Retainer assemblies, such as those disclosed in our US-A-4 182 578 (corresponding to the pre-characterising part of claim 1) and US-A-4 288 172 have been successfully employed to reduce such end play movement. Thus US-A-4 182 578 discloses a track joint of a kind (hereinafter referred to as of the kind described) for an endless track of a crawler vehicle, the joint comprising a pair of outboard links, a pair of inboard links and a pin extending through bores in the links, the inboard links being pivotal relatively to the outboard links about the axis of the pin ; each outboard link being secured on a respective end portion of the pin by means of an annular circumferential groove in the pin end portion, the groove having an axially inwardly facing surface, an outwardly facing socket at the outboard end of the bore in the outboard link and having an axially outwardly facing surface, the groove and socket forming an outwardly opening annular cavity and an annular retainer located in the cavity. However, the retainer comprises arcuate keys held in the cavity by a keeper ring. In order to accommodate manufacturing tolerances, joints utilizing such keepers must have a certain amount of clearance which produces a limited amount of built-in end play. As a result, these keepers reduce, but do not completely eliminate, end play.

Another method of limiting end play is disclosed in our US-A-3 831 257 wherein welding about the ends of the track pins is employed. In this method, retention is quite dependent on the strength of the weld. In practice, weld strength is difficult to control with any degree of consistency.

If a weld is so weak that it breaks, all of its retention ability is lost.

In US-A-1 507 757 a soft metal key is driven through an opening in a rail and shoe of a track unit and into an angled pin groove to provide a locking device for securing the pin with the track unit. However this also fails to prevent relative rocking movement of the outboard links relatively to the pin.

In accordance with one aspect of the present invention, a joint of the kind described is characterized in that each annular retainer is a permanently deformed, metal formed-in-place retainer positioned in and conforming to the shape of the respective cavity.

In accordance with a second aspect of the invention a method of assembling a track joint for an endless track of a crawler vehicle, the method comprising providing a pair of outboard links formed with bores, a pair of inboard links formed with bores, and a pin to be extended through the bores in the links to render the inboard links pivotal relatively to the outboard links about the axis of the pin ; wherein each outboard link is secured on a respective end portion of the pin by providing an annular circumferential groove having an axially inwardly facing surface and located in the pin end portion, a socket having an outwardly facing surface at the outboard end of the bore in the outboard link, the groove and socket forming an outwardly open annular cavity ; and inserting an annular retainer in the cavity ; is characterized in that an annular metal retainer preform is aligned with the opening to the annular cavity and is forced into the annular cavity whereby the preform is permanently deformed and conforms to the shape of the cavity.

The formed-in-place retainer, which may have in its deformed state, a modulus of elasticity preferably in excess of 25 million pounds per square inch (172 000 MPa), is thus tightly intruded into the retainer cavity between a surface in the link socket and an opposite surface in the pin groove to provide a rigid lock between the pin and link, thereby limiting end play movement.

A joint constructed or assembled in accordance with the first or second aspect of the invention may be repaired by a method comprising pushing the pin out of the bore in at least one of the outboard links and hence shearing the respective retainer ; removing the sheared retainer pieces ; replacing the pin end portion into the bore in the outboard link ; aligning an annular metal retainer preform with the opening to the respective annular cavity and forcing the preform into the annular cavity so that the preform is permanently deformed and conforms to the shape of the cavity to provide a new retainer.

The invention also includes a retainer preform for use in the assembly or repair of a joint which is constructed or assembled according to the first or second aspect of the invention, the preform comprising a ring of material having a modulus of elasticity in the range of 131 000 to 207 000 MPa and a generally rectangular cross-sectional configuration ; a lead-in chamfer around the periphery of one end of the preform, the chamfer being disposed at an angle in the range of between 15 and 25° to the axis of the ring ; a bevelled face at the one end and extending radially inwardly and towards the other end of the ring between the chamfer and the inner periphery of the ring ; and a plurality of substantially radially oriented slots extending axially from the one end a distance of at least 25 % of the axial length of the ring.

The invention will now be described by way of example with reference to the accompanying drawings, in which :

Figur 1 is a fragmentary plan view of an endless track with a portion of a joint thereof in section illustrating an embodiment of the retaining apparatus ;

Figure 2 is a frontal view of a preferred embodiment of the preform ;

Figure 3 is a side view of the preform of Fig. 2 ;

Figure 4 is an enlarged sectional view of one end of the joint illustrated in Fig. 1 ;

Figure 5 is a greatly enlarged fragmentary sectional view of the apparatus shown in Fig. 1 ;

Figure 6 is a view similar to Fig. 5, but illustrating a preform as it would appear entering the retainer cavity before deformation ;

Figure 7 is a force/displacement curve of a preferred embodiment of the formed-in-place retainer ; and,

Figure 8 is an enlarged sectional view similar to Fig. 4, but illustrating the fromed-in-place retainer as it would appear when being sheared in response to removing the pin.

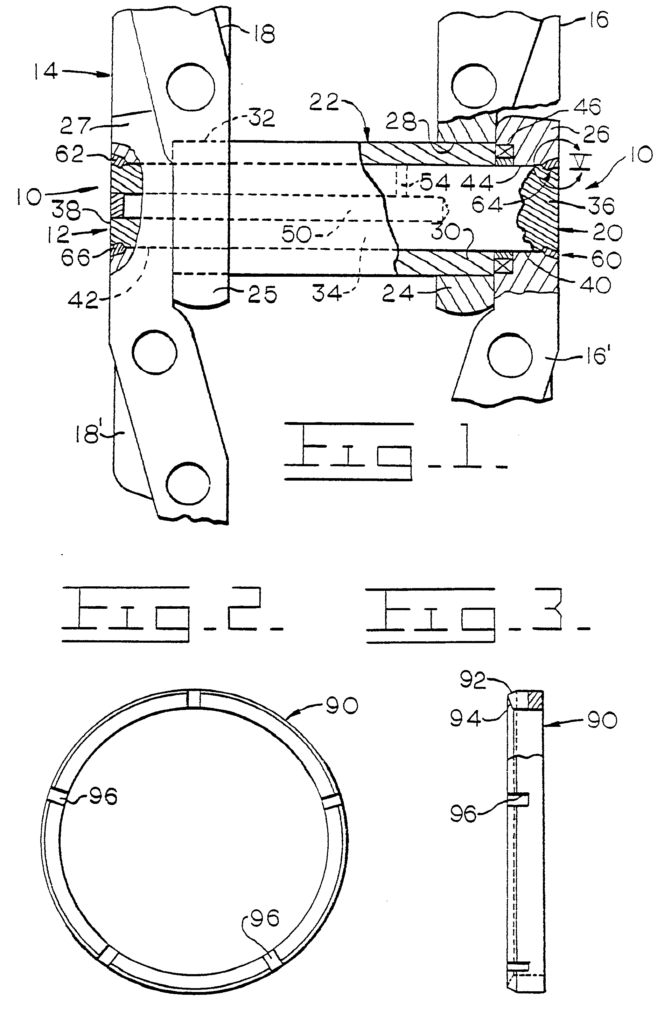

Referring more particularly to Fig. 1 of the drawings, apparatus embodying the principals of the present invention is generally depicted at 10 for rigidly retaining a joint 12 of an endless track 14 of the type used on a crawler-type vehicle, not shown. The endless track 14 is generally of a conventional design, the major components of which include a plurality of right-hand links 16, 16' and left-hand links 18, 18', pins 20 and hollow bushings 22. Each right-hand link 16, 16' and left-hand link 18, 18' has an inboard end portion 24, 25, and an opposite outboard end portion 26, 27, respectively. The inboard end portions 24, 25 each have a bore 28 of a size sufficient to enable the inboard end portions to be press fitted onto the ends 30, 32 of the bushing 22. The pins 20 have a mid-portion 34, opposite ends 36 and 38 and opposite end portions 40 and 42. The pin mid-portion 34 is of a size to be received within the hollow bushing 22 and freely pivot relative to the bushing.

The outboard end portions 26, 27 of the links 16', 18' each have a bore 44. Each bore 44 is of a size sufficient to enable the outboard end links portions 26, 27 to be press fitted onto the opposite end portions 40, 42 of the pin 20.

The above assemblage is successively repeated with the next adjoining links, pins and bushings to complete the construction of the endless track.

While not intended to be so limited, the embodiment of the present invention to be hereinafter described is particularly well suited for use in an endless track which is sealed and lubricated. A track of this configuration normally has each joint provided with a pair of seals, one of which is shown at 46, and a lubricant reservoir, such as a sealed bore 50 in the pin 20. As best shown in Fig. 4, each seal 46 is disposed within a counterbore 52 in each link outboard end portion 26 and 27. Lubricant in the reservoir 50 is communicated to the pivoting interface between the bushing 22 and the mid-portion 34 of the pin 20 by a cross hole 54 in the pin 20, as best shown in Fig. 1. A thrust ring 56 is disposed in each of the counterbores 52 so that all of the joint components can be pushed together into abutment without crushing the seals 46. In other words, the outboard link end portions 26 and 27 are in close abutting contact with adjacent ends of the thrust rings 56. The other ends of the thrust rings abut the adjacent opposite end of the bushing 22. As a consequence, there is essentially no end play in the joint 12 after the assemblage is completed.

The apparatus 10 is principally directed toward maintaining the above-described abutting relationship during operation of the crawler-type vehicle. The apparatus 10 includes a pair of retainer cavities 60 and 62, each cavity being of a shape and orientation to receive and deform a respective one of a pair of formed-in-place retainers 64 and 66.

As both cavities 60, 62 are mirror images of each other, only cavity 60 will be hereinafter described in detail with particular reference to Figs. 4 through 6, it being understood that such description applies to cavity 62.

Cavity 60 is defined by a pin groove 70 and a link socket 72. Groove 70 is formed in its respective pin end portion 40 and extends around at least a portion of the circumference of such end portion. While it should be understood that the groove 70 need be only partially or in segments about the circumference of the pin, it is preferable that it be continuous or annular to avoid the waste of time, labor and equipment in machining the part.

The groove 70 is disposed a preselected distance from the adjacent pin end 36. Such distance is related to the physical properties of the pin and is sufficient to provide the portion of the pin between its end 36 and the groove 70 with strength greater than that of the retainer 64. Maintaining this relative strength relationship functions to prevent damage or breakage of the pin during disassembly of the joint.

Referring to Fig. 5, the groove 70 preferably has a frustoconical surface 76, a bottom extremity 78 and a curvilinear side wall 80. The curvilinear side wall 80 extends from the cylindrical surface of the pin end portion 40 to the bottom extremity 78. The frustoconical surface 76 joins the curvilinear surface 80 adjacent the bottom extremity 78 and extends radially outwardly toward its peripheral edge adjacent the pin end 36. The frustoconical surface 76 is at an angle within a range of from between 20 to 30 degrees from its central axis, and preferably at an angle of approximately 25 degrees. The above configuration facilitates the substantially complete filling of the groove 70 by the retainer 64.

The socket 72 is formed in the link outboard end portion 26. The socket 72 is disposed in registry along an imaginary interface 81 with pin groove 70 when link outboard end portion 26 is in its installed position on the pin end portion 40. The socket 72 can be of other configurations depending on various criteria, such as material hardness and configuration of the retainer preform. Preferably, however, the socket 72 has at least a first frustoconical surface 82. This first frustoconical surface 82 is disposed in a spaced concentric relationship to the groove frustoconical surface 76 and extends radially inwardly from an outer side 84 of the link outboard end portion 26 toward the link bore 44. The cavity 60 has an annular opening 85 on the outer side 84. The first frustoconical surface 82 is preferably disposed at a second angle which is less than the angle of the groove frustoconical surface 76. This second angle is preferably within a range of 15 to 25 degrees, with an angle of about 20 degrees being preferable. Providing the first frustoconical surface 82 with an angle less than the angle of the groove frustoconical surface 76 advantageously produces a wedging action on the retainer 64 which facilities the loading of the retainer in shear on application of an axial force F, as shown in Fig. 5.

The socket 72 preferably includes a second frustoconical surface 86 extending from the first frustoconical surface 82 to an inner peripheral edge 88 adjacent the link bore 44. The second frustoconical surface 86 is preferably at an angle of approximately 45 degrees which facilitates the intrusion of the retainer 64 into the groove 70.

Prior to being deformed, the formed-in-place retainers 64, 66 are each identified as a preform 90, as shown in Figs. 2, 3, and 6. While the preform 90 is herein disclosed as being a continuous ring, a split ring is intended to be included within the scope of the present invention. It should also be understood that the preform 90 may take other configurations with the following description being exemplary of the preferred configuration.

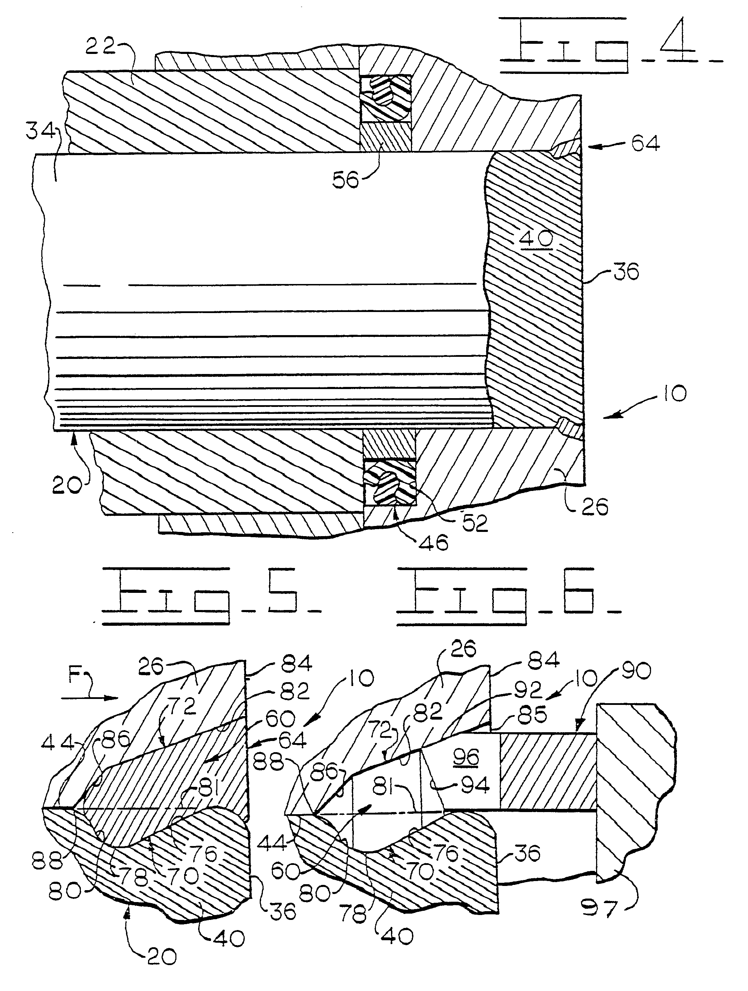

As best shown in Figs. 3 and 6, the preform 90 has a generally rectangular cross-sectional configuration provided with a lead-in chamfer 92 about the periphery of one end thereof and a beveled face 94 on such end. The lead-in chamfer is preferably at the same angle as the first frustoconical surface 82 of the socket 72. The beveled face 94 is preferably at an angle such that it is parallel to the side wall 80 of the groove upon intrusion of the preform into the cavity 60 to facilitate filling of the groove 70.

As best shown in Figs. 2 and 3, the preform 90 is preferably provided with a plurality of radially oriented slots 96. The slots 96 extend a preselected axial distance into the preform 90 from the beveled end face 94. This arrangement is advantageous during any required disassembly of the joint 12, as hereinafter described, and facilitates the intrusion of the preform 90 into the groove 70.

In order to provide sufficient strength and rigidity for use in the track joint 12, the preform 90 is a ferrous material having a modulus of elasticity in the range of 19 to 30 million psi (131 000 to 207 000 MPa). A preform 90 constructed from a wrought steel with a hardness in a range of from Rockwell B60 to C35 has been found to be preferred. It should be understood, however, that the hardness of the preform 90 must be less than the corresponding hardness of the materials of the link and pin forming the cavity 60.

A ferrous powdered metal material can be satisfactorily used for the preform 90. Such powdered metal preform 90 preferably has a minimum initial density of 6.8 grams per cubic centimeter. After installation, the powdered metal material preferably has a minimum density of 7.5 grams per centimeter. The hardness of the powdered metal preform 90 is preferably in a range of from Rockwell B40 to B100, with a preferred hardness of Rockwell B90.

To construct an endless track 14, the links 16,16' and 18,18', pins 20 and bushings 22 are assembled in the manner described above. A preform 90 is thereafter placed adjacent the annular opening 85 of the cavity 60. A sufficient force, as by means of a press 97, is then applied to the preform 90 to ram the preform 90 into the cavity 60 resulting in the preform 90 being plastically deformed and intruded into its formed-in-place retainer shape substantially conforming to the shape of the cavity 60. A force in the range of 100 000 to 200 000 pounds (445 to 890 kN) is normally required, with a force of approximately 150 000 pounds (667 kN) being typical. Forces in this range ensures the substantially complete filling of the cavity 60 and the tight wedging of the retainer material against all of the surfaces of the cavity 60. More importantly, the retainer material is tightly compacted between reacting surfaces defined principally by the frustoconical surface 76 of the groove 70 and the second frustoconical surface 86 of the socket 72 which are disposed on opposite sides of the interface 81 between the groove 70 and socket 72 portions of the cavity 60. As a consequence, an axial force F, as shown in Fig. 5, acting on the link outboard end portion 26 is resisted through the shear properties of the formed-in-place retainer 64. Because of its high modulus of elasticity, the retainer 64 is substantially rigid, thus preventing any significant outward axial movement of the outboard end portion 26 on the pin end portion 40. A second preform 90 is similarly pressed into its cavity 62 at the other end of the joint 12.

In an example assembly, an experimental test was run on a laboratory press of a retainer of the above-described configuration made from a ferrous powdered metal material and having a Rockwell B60 hardness. The shear area of about 1.5 square inches (9.68 CM²) along the interface 98 was capable of withstanding a shear force in excess of 50 000 pounds (22 680 Kg) without plastic deformation occurring in the retainer. The powdered metal retainer had a modulus of elasticity of about 19 million psi (131 000 MPa) before deformation, and about 25 million psi (172 000 MPa) after deformation. This increase in modulus of elasticity was in response to the increase in density resulting from the large deformation force applied during intrusion of the preform 90 into the cavity.

It should be noted that by varying the shear area, the shear force carrying capability of the retainer 64 can be varied. Hence, the retainer 64 can be designed in accordance with the actual forces which will be experienced during operation of the various sizes of crawler vehicles. Shear force capability can thereby be maintained at a value greater than the operational forces. As a consequence, an endless track 14 constructed in accordance with the present invention will have joints 12 which have virtually no end play during operation of the crawler-type vehicle.

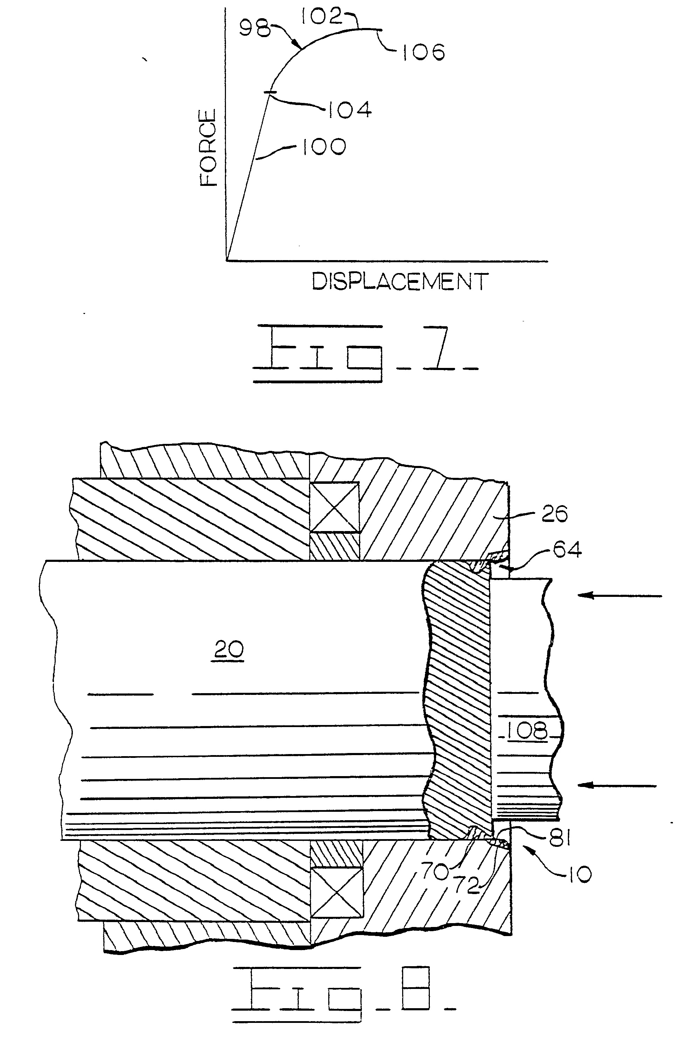

As noted above, the material of the retainer 64 has a high modulus of elasticity. This produces a force/displacement curve 98, as depicted in Fig. 7, having a steep sloped straight line portion 100 which is in the elastic range of this material and an abrupt curved portion 102 in its plastic range. By providing the retainer 64 with the preferred mechanical properties described above, the elastic limit 104 can be elevated. As a consequence, the retainer 64 is able to withstand a higher force without suffering plastic deformation and with very little deflection. Also, the difference in the force between the elastic limit 104 and the ultimate strength 106 of the material is reduced. It is desirable that the ultimate strength 106 be no more than 25 % greater than the elastic limit 104. This is advantageous in that the retainer 64 can be designed to withstand operational forces approaching its elastic limit 104 without too great of an additional force being required to shear the retainer 64 for disassembly purposes. Thus, the force necessary to remove the pin 20 and simultaneously shear the retainer 64 is kept within the capacities of currently employed track presses. This eliminates waste and expenses in acquiring higher capacity track presses.

The retaining apparatus 10 of the present invention enables the track 14 to be disassembled for repair or replacement of worn components, such as the links 16, 18 or bushings 22, and then be reassembled. As depicted in Fig. 8, this is accomplished by means of a press 108 which pushes the pin 20 out of the link outboard end portions 26 and 27, while simultaneously shearing the formed-in-place retainers 64 and 66 along their respective interfaces 81. The sheared off portions of the retainers 64 and 66 are thereafter removed from their corresponding grooves 70 and sockets 72. Removal from the grooves 70 is facilitated by the slots 96, shown in Figs. 2 & 3, which are preferably of a depth so as to extend past the interface 81. As a consequence, the portion of the preform 90 which had been intruded into the groove 70 becomes a plurality of pieces upon being sheared. Ordinarily, these pieces will simply fall out of the groove upon removal of the pin 20 from the joint 12. To rebuild the track 14, the track components are reassembled as they were initially and a new preform 90 is placed adjacent each of the openings 85 of the cavities 60 and 62. A force is applied to each of the preforms 90 to cause their intrusion into their respective cavities 60, 62 and deformation into new formed-in-place retainers 64 and 66.

After an extended period of operation of the track 14, a certain amount of end play can develop in the joint 12 due to internal wear between the axially abutting components of the joint 12. If this happens, the retainers 64 and 66 can advantageously be repressed to again eliminate this end play.

## Claims

1. A track joint (12) for an endless track (14) of a crawler vehicle, the joint comprising a pair of outboard links (16', 18'), a pair of inboard links (16, 18) and a pin (20) extending through bores (28, 44) in the links, the inboard links being pivotal relatively to the outboard links about the axis of the pin ; each outboard link being secured on a respective end portion (40, 42) of the pin by means of an annular circumferential groove (70) in the pin end portion, the groove having an axially inwardly facing surface (76), an outwardly facing socket (72) at the outboard end of the bore in the outboard link and having an axially outwardly facing surface (82, 86), the groove and socket forming an outwardly opening annular cavity (60, 62) and an annular retainer (64, 66) located in the cavity ; characterized in that each annular retainer is a permanently deformed, metal formed-in-place retainer (64, 66) positioned in and conforming to the shape of the respective cavity.

2. A joint according to claim 1, wherein each of the retainers (64, 66) is made of a ferrous material.

3. A joint according to claim 1 or claim 2, in which the axially inwardly facing surface (76) of each groove (70) comprises a first outwardly flared frustoconical surface (76).

4. A joint according to claim 3, in which the axially outwardly facing surface of each socket (72) comprises a second outwardly flared frustoconical surface (82) which surrounds concentrically the respective groove (70).

5. A joint according to claim 4, wherein the angle between the first frustoconical surface (76) and the axis of the pin is greater than that between the second frustoconical surface (82) and the axis of the pin.

6. A joint according to claim 5, wherein the first frustoconical surface (76) is at an angle of between 20 and 30° to the axis of the pin, and the second frustoconical surface (82) is at an angle of between 15 and 25° to the axis of the pin.

7. A joint according to any one of claims 4 to 6, wherein the outwardly facing surface of each socket (72) includes a third outwardly flared frustoconical surface (86) extending between the inboard end of the second frustoconical surface (82) and the bore (44), the third frustoconical surface being at a greater angle to the axis of the pin than the second frustoconical surface.

8. A joint according to claim 7, wherein the third frustoconical surface is at an angle of substantially 45° to the axis of the pin.

9. A method of assembling a track joint (12) for an endless track (14) of a crawler vehicle, the method comprising providing a pair of outboard links (16′, 18′), formed with bores (44), a pair of inboard links (16, 18) formed with bores (28), and a pin (20) to be extended through the bores in the links to render the inboard links pivotal relatively to the outboard links about the axis of the pin ; wherein each outboard link (16′, 18′) is secured on a respective end portion (40, 42) of the pin by providing an annular circumferential groove (70) having an axially inwardly facing surface (76) and located in the pin end portion, a socket (72) having an outwardly facing surface (82, 86) at the outboard end of the bore in the outboard link, the groove and socket forming an outwardly open annular cavity (60, 62) ; and inserting an annular retainer (64, 66) in the cavity ; characterized in that an annular metal retainer preform (90) is aligned with the opening (85) to the annular cavity (60, 62) and is forced into the annular cavity whereby the preform is permanently deformed and conforms to the shape of the cavity.

10. A method according to claim 9, wherein the preform is made of a ferrous material having a modulus of elasticity in the range of 131 000 to 207 000 MPa.

11. A method according to claim 10, wherein each preform is made of wrought steel having a hardness in the range Rockwell B60 to C35.

12. A method according to claim 11, wherein the hardness is substantially Rockwell B90.

13. A method according to claim 9 or claim 10, wherein the preform is made of a powered ferrous metal having a minimum density of 6.8 g/cc.

14. A method according to claim 13, wherein the powered metal has a minimum density of 7.5 g/cc after being forced into the cavity and deformed.

15. A method according to claim 13 or claim 14, wherein the preform (90) has a hardness in the range of Rockwell B40 to B100.

16. A method according to claim 15, wherein the hardness is substantially Rockwell B90.

17. A method according to any one of claims 9 to 16, wherein the preform is a ring having a plurality of generally radially oriented slots (96) extending along part of its axial dimension from its inboard end.

18. A method according to any one of claims 10 to 17, wherein the preform (90) has a substantially rectangular cross-sectional configuration, with a bevelled lead-in chamfer (92) at its inboard end, the chamfer being disposed at an angle which is substantially equal to the angle of the axially outwardly facing surface (82) at the entrance to the socket (72).

19. A method of repairing a joint according to any one of claims 1 to 8, or a joint made by a method according to any one of claims 9 to 18, the method comprising pushing the pin (20) out of the bore (44) in at least one of the outboard links (16′, 18′) and hence shearing the respective retainer (64, 66) ; removing the sheared retainer pieces ; replacing the pin end portion (40, 42) into the bore (44) in the outboard link ; aligning an annular metal retainer preform (90) with the opening (85) to the respective annular cavity (60, 62) and forcing the preform into the annular cavity so that the preform is permanently deformed and conforms to the shape of the cavity to provide a new retainer.

20. A retainer preform (90) for use in the assembly or repair of a joint which is constructed or assembled according to any one of the preceding claims, the preform comprising a ring of material having a modulus opf elasticity in the range of 131 000 to 207 000 MPa and a generally rectangular cross-sectional configuration ; a lead-in chamfer (92) around the periphery of one end of the preform, the chamfer being disposed at an angle in the range of between 15 and 25° to the axis of the ring ; a bevelled face (94) at the one end and extending radially inwardly and towards the other end of the ring between the chamfer (92) and the inner periphery of the ring ; and a plurality of substantially radially oriented slots (96) extending axially from the one end a distance of at least 25 % of the axial length of the ring.

21. A preform according to 20, wherein the material is a wrought steel having a hardness in a range of Rockwell B60 to C35.

22. A preform according to claim 21, wherein the material is a powered ferrous metal having an initial minimum density of 6.8 g/cc and a hardness in the range of Rockwell B40 to B100.

**Patentansprüche**

1. Kettenverbindung (12) für eine endlose Kette (14) eines Gleiskettenfahrzeugs, wobei die Verbindung folgendes aufweist : ein Paar von Außenverbindungen (16′, 18′), ein Paar von Innenverbindungen (16, 18) und ein Stift (20), der sich durch Bohrungen (28, 44) in den Verbindungen erstreckt, wobei die Innenverbindungen bezüglich der Außenverbindungen um die Stiftachse verschwenkbar sind, wobei jede Außenverbindung an einem entsprechenden Endteil (40, 42) des Stifts befestigt ist, und zwar mittels einer ringförmigen Umfangsnut (70) im Stiftendteil, wobei die Nut eine axial nach innen weisende Oberfläche (76), einen nach außen weisenden Sockel (72) am Außenende der Bohrung im Außengelenk und eine axial nach außen weisende Oberfläche (82, 86) aufweist, wobei ferner die Nut und der Sockel einen sich nach außen öffnenden Ringhohlraum (60, 62) bilden und ein Ringhalter (64, 66) in dem Hohlraum angeordnet ist, dadurch gekennzeichnet, daß jeder Ringhalter ein permanent deformierter, an Ort und Stelle ausgebildeter Metallhalter (64, 66) ist, und zwar positioniert in und angepaßt an die Form des entsprechenden Hohlraums.

2. Verbindung nach Anspruch 1, wobei jeder der Halter (64, 66) aus einem Eisenmaterial hergestellt ist.

3. Verbindung nach Anspruch 1 oder 2, wobei die axial nach innen weisende Oberfläche (76) jeder Nut (70) eine erste nach außen sich erweiternde kegelstumpfförmige Oberfläche (76) aufweist.

4. Verbindung nach Anspruch 3, wobei die axial nach außen weisende Oberfläche jedes Sockels (72) eine zweite nach außen sich erweiternde kegelstumpfförmige Oberfläche (82) aufweist, welche konzentrisch die entsprechende Nut (70) umgibt.

5. Verbindung nach Anspruch 4, wobei der Winkel zwischen der ersten kegelstumpfförmigen Oberfläche (76) und der Achse des Stifts größer ist als der Winkel zwischen der zweiten kegelstumpfförmigen Oberfläche (82) und der Achse des Stifts.

6. Verbindung nach Anspruch 5, wobei die erste kegelstumpfförmige Oberfläche (76) einen Winkel zwischen 20 und 30° bezüglich der Stiftachse aufweist, und wobei die zweite kegelstumpfförmige Oberfläche (82) einen Winkel zwischen 15 und 25° mit der Stiftachse bildet.

7. Verbindung nach einem der Ansprüche 4 bis 6, wobei die nach außen weisende Oberfläche jedes Sockels (72) eine dritte nach außen sich erweiternde kegelstumpfförmige Oberfläche (86) aufweist, die sich zwischen dem Innenende der zweiten kegelstumpfförmigen Oberfläche (82) und der Bohrung (44) erstreckt, wobei die dritte kegelstumpfförmige Oberfläche einen größeren Winkel gegenüber der Stiftachse bildet als die zweite kegelstumpfförmige Oberfläche.

8. Verbindung nach Anspruch 7, wobei die dritte kegelstumpfförmige Oberfläche einen Winkel von im wesentlichen 45° mit der Stiftachse bildet.

9. Verfahren zum Zusammenbau einer Kettenverbindung (12) für eine endlose Kette (14) eines Gleiskettenfahrzeugs, wobei das Verfahren folgendes aufweist : Vorsehen eines Paars von Außenverbindungen (16', 18'), ausgebildet mit Bohrungen (44), ein Paar von Innenverbindungen (16, 18), ausgewählt mit Bohrungen (28) und einem Stift (20), der durch die Bohrungen in den Verbindungen erstreckt werden kann, um die Innenverbindungen schwenkbar um die Achse des Stifts bezüglich der Außenverbindungen zu machen, wobei jede Außenverbindung (16', 18') an einem entsprechenden Endteil (40, 42) des Stifts befestigt ist, und zwar durch Vorsehen einer ringförmigen Umfangsnut (70) mit einer axial nach innen weisenden Oberfläche (76) und angeordnet in dem Stiftendteil, wobei ein Sockel (72) eine nach außen weisende Oberfläche (82, 86) am Außenende der Bohrung in der Außenverbindung aufweist, wobei Nut und Sockel einen nach außen offenen Ringhohlraum (60, 62) bilden, wobei ferner ein Ringhalter (64, 66) in den Hohlraum eingesetzt wird, dadurch gekennzeichnet, daß eine ringförmige Metallhaltervorform (90) mit der Öffnung (85) zum Ringhohlraum (60, 62) ausgerichtet ist und in den Ringhohlraum zwangsweise eingeführt wird, wodurch die Vorform permanent deformiert wird und sich an die Form des Hohlraums anpaßt.

10. Verfahren nach Anspruch 9, wobei die Vorform aus einem Eisenmaterial hergestellt ist, und zwar mit einem Elastizitätsmodul im Bereich von 131 000 bis 207 000 MPa.

11. Verfahren nach Anspruch 10, wobei jede Vorform aus Roheisen hergestellt ist mit einer Härte im Bereich von Rockwell B60 bis C35.

12. Verfahren nach Anspruch 11, wobei die Härte im wesentlichen Rockwell B90 ist.

13. Verfahren nach Anspruch 9 oder 10, wobei die Vorform aus einem gepulverten Einsenmetall hergestellt ist, und zwar mit einer minimalen Dichte von 6,8 g/cc.

14. Verfahren nach Anspruch 13, wobei das gepulverte Metall eine Minimaldichte von 7,5 g/cc besitzt, und zwar nach dem zwangsweisen Einführen in den Hohlraum und der Deformation.

15. Verfahren nach Anspruch 13 oder 14, wobei die Vorform (90) eine Härte im Bereich von Rockwell B40 bis B100 aufweist.

16. Verfahren nach Anspruch 15, wobei die Härte im wesentlichen Rockwell B90 ist.

17. Verfahren nach einem der Ansprüche 9 bis 16, wobei die Vorform ein Ring ist mit einer Vielzahl von im ganzen radial orientierten Schlitzen (96), die sich längs eines Teils seiner Axialabmessung vom Innenende aus erstrecken.

18. Verfahren nach einem der Ansprüche 10 bis 17, wobei die Vorform (90) eine im wesentlichen rechteckige Querschnittsform aufweist, wobei am Innenende eine abgeschrägte Einführschräge (92) vorgesehen ist, die unter einem Winkel angeordnet ist, der im wesentlichen gleich dem Winkel der axial nach außen weisenden Oberfläche (82) am Eingang zum Sockel (72) ist.

19. Verfahren zur Reparatur einer Verbindung nach einem der Ansprüche 1 bis 8 oder eine Verbindung, hergestellt nach dem Verfahren gemäß einem der Ansprüche 9 bis 18, wobei das Verfahren folgendes aufweist : Hinausschieben des Stifts (20) aus der Bohrung (44) in mindestens einer der Außenverbindungen (16', 18') und somit Abscheren des entsprechenden Halters (64, 66), Entfernung der abgescherten Halterteile, Ersetzen des Stiftendteils (40, 42) in der Bohrung (44) in der Außenverbindung, Ausrichten einer ringförmigen Metallhaltervorform (90) mit der Öffnung (85) mit dem entsprechenden Ringhohlraum (60, 62) und zwangsweise Einführung der Vorform in den Ringhohlraum derart, daß die Vorform permanent deformiert ist, und sich der Form des Hohlraums anpaßt, um einen neuen Halter zu bilden.

20. Haltervorform (90) zur Verwendung beim Zusammenbau oder Reparatur einer Verbindung, die aufgebaut oder zusammengebaut ist gemäß einem der vorhergehenden Ansprüche, wobei die Vorform folgendes aufweist : einen Ring aus einem Material mit einem Elastizitätsmodul im Bereich von 131 000 bis 207 000 MPa und mit im ganzen rechteckiger Querschnittsform, eine Einführungsabschrägung (92) um den Umfang eines Endes der Vorform herum, wobei die Abschrägung unter einem Winkel im Bereich von 15 bis 25° gegenüber der Ringachse angeordnet ist, eine abgeschrägte Stirnfläche (94) an dem einen Ende und sich radial nach innen zu dem anderen Ende des Rings erstreckend, und zwar zwischen der Abschrägung (92) und dem Innenumfang des Rings, und eine Vielzahl von im wesentlichen radial orientierten Schlitzen (96), die sich axial von dem einen Ende aus erstrecken über einen Abstand von mindestens 25 % der Axiallänge des Rings.

21. Vorform nach Anspruch 20, wobei das Material ein Rohstahl ist mit einer Härte im Bereich von Rockwell B60 bis C35.

22. Vorform nach Anspruch 21, wobei das Material ein gepulvertes Eisenmetall ist mit einer anfänglichen Minimaldichte von 6,8 g/cc und einer Härte im Bereich von Rockwell B40 bis B100.

## Revendications

1. Joint de chemin de roulement (12) pour un chemin de roulement sans fin (14) d'un véhicule à chenilles, le joint comportant deux pièces de liaison extérieures (16', 18'), deux pièces de liaison intérieures (16, 18) et une goupille (20) s'étendant dans des alésages (28, 44) ménagés dans les pièces de liaison, les pièces de liaison intérieures étant pivotantes par rapport aux pièces de liaison extérieures autour de l'axe de la goupille ; chaque pièce de liaison extérieure étant fixée sur une partie d'extrémité respective (40, 42) de la goupille au moyen d'une rainure circonférentielle annulaire (70) ménagée dans la partie d'extrémité de la goupille, la rainure ayant une surface tournée axialement vers l'intérieur (76), un manchon (72) tourné vers l'extérieur étant disposé au niveau de l'extrémité extérieure de l'alésage ménagé dans la pièce de liaison extérieure et ayant une surface tournée axialement vers l'extérieur (82, 86), la rainure et le manchon formant une cavité annulaire s'ouvrant vers l'extérieur (60, 62) et un élément de retenue annulaire (64, 66) étant situé dans la cavité ; caractérisé en ce que chaque élément de retenue annulaire est un élément de retenue métallique, formé une fois mis en place et déformé de façon permanente (64,

66), lequel est positionné dans la cavité correspondante et épouse la forme de celle-ci.

2. Joint selon la revendication 1, dans lequel chacun des éléments de retenue (64, 66) est fait d'un matériau ferreux.

3. Joint selon la revendication 1 ou 2, dans lequel la surface tournée axialement vers l'intérieur (76) de chaque rainure (70) comporte une première surface tronconique évasée vers l'extérieur (76).

4. Joint selon la revendication 3, dans lequel la surface tournée axialement vers l'extérieur de chaque manchon (72) comporte une seconde surface tronconique évasée vers l'extérieur (82) qui entoure concentriquement la gorge correspondante (70).

5. Joint selon la revendication 4, dans lequel l'angle défini entre la première surface tronconique (76) et l'axe de la goupille est supérieur à celui défini entre la seconde surface tronconique (82) et l'axe de la goupille.

6. Joint selon la revendication 5, dans lequel la première surface tronconique (76) est située à un angle compris entre 20 et 30° par rapport à l'axe de la goupille, et la seconde surface tronconique (82) est située à un angle compris entre 15 et 25° par rapport à l'axe de la goupille.

7. Joint selon l'une quelconque des revendications 4 à 6, dans lequel la surface tournée vers l'extérieur de chaque manchon (72) comporte une troisième surface tronconique évasée vers l'extérieur (86) s'étendant entre l'extrémité intérieure de la seconde surface tronconique (82) et l'alésage (44), la troisième surface tronconique étant située à un angle plus grand, par rapport à l'axe de la goupille, que la seconde surface tronconique.

8. Joint selon la revendication 7, dans lequel la troisième surface tronconique est située à un angle sensiblement égal à 45° par rapport à l'axe de la goupille.

9. Méthode d'assemblage d'un joint de chemin de roulement (12) pour un chemin de roulement sans fin d'un véhicule à chenilles, la méthode consistant à prévoir deux pièces de liaison extérieures (16', 18'), formées d'alésages (44), deux pièces de liaison intérieures (16, 18) formées d'alésages (28), et une goupille (20) destinée à s'étendre dans les alésages ménagés dans les pièces de liaison afin de rendre les pièces de liaison intérieures pivotantes par rapport aux pièces de liaison extérieures autour de l'axe de la goupille ; dans laquelle chaque pièce de liaison extérieure (16', 18') est fixée sur une partie d'extrémité respective (40, 42) de la goupille en pratiquant une rainure circonférentielle annulaire (70) pourvue d'une surface tournée axialement vers l'intérieur (76) et située dans la partie d'extrémité de la goupille, un manchon (72) ayant une surface tournée vers l'extérieur (82, 86) au niveau de l'extrémité extérieure de l'alésage ménagé dans la pièce de liaison extérieure, la rainure et le manchon formant une cavité annulaire ouverte vers l'extérieur (60, 62) ; et à insérer un élément de retenue annulaire (64, 66) dans la cavité ;

caractérisée en ce qu'une ébauche d'élément de retenue métallique annulaire (90) est placée dans l'alignement de l'ouverture (85) de la cavité annulaire (60, 62) et est introduite en force dans la cavité annulaire, l'ébauche étant ainsi déformée de façon permanente et épousant la forme de la cavité.

10. Méthode selon la revendication 9, dans laquelle l'ébauche est faite d'un matériau ferreux possédant un module d'élasticité qui se situe dans la plage de 131 000 à 207 000 MPa.

11. Méthode selon la revendication 10, dans laquelle chaque ébauche est faite d'acier forgé possédant une dureté Rockwell qui se situe dans la plage de B60 à C35.

12. Méthode selon la revendication 11, dans laquelle la dureté Rockwell est sensiblement égale à B90.

13. Méthode selon la revendication 9 ou 10, dans laquelle l'ébauche est formée d'un métal ferreux pulvérisé possédant une densité minimale de 6,8 g/cc.

14. Méthode selon la revendication 13, dans laquelle le métal pulvérisé possède une densité minimale de 7,5 g/cc après avoir été introduit en force dans la cavité et déformé.

15. Méthode selon la revendication 13 ou 14, dans laquelle l'ébauche (90) possède une dureté Rockwell qui se situe dans la plage de B40 à B100.

16. Méthode selon la revendication 15, dans laquelle la dureté Rockwell est sensiblement égale à B90.

17. Méthode selon l'une quelconque des revendications 9 à 16, dans laquelle l'ébauche est un anneau pourvu de plusieurs fentes orientées dans une direction générale radiale (96) et s'étendant le long d'une partie de sa dimension axiale depuis son extrémité intérieure.

18. Méthode selon l'une quelconque des revendications 10 à 17, dans laquelle l'ébauche (90) possède une configuration de section sensiblement rectangulaire, un chanfrein d'entrée biseauté (92) étant ménagé au niveau de son extrémité intérieure, le chanfrein étant disposé suivant un angle sensiblement égal à l'angle de la surface tournée axialement vers l'extérieur (82) au niveau de l'entrée du manchon (72).

19. Méthode de réparation d'un joint selon l'une quelconque des revendications 1 à 8, ou d'un joint fabriqué par une méthode selon l'une quelconque des revendications 9 à 18, la méthode consistant à pousser la goupille (20) hors de l'alésage (44) ménagé dans l'une au moins des pièces de liaison extérieures (16', 18') et par conséquent à cisailler l'élément de retenue correspondant (64, 66) ; à ôter les morceaux d'élément de retenue cisaillé ; à replacer la partie d'extrémité de la goupille (40, 42) dans l'alésage (44) ménagé dans la pièce de liaison extérieure ; à placer une ébauche d'élément de retenue métallique annulaire (90) dans l'alignement de l'ouverture (85) de la cavité annulaire correspondante (60, 62) et à introduire en force l'ébauche dans la cavité annulaire de telle manière que l'ébauche soit déformée de façon permanente et épouse la forme de la cavité pour former un nouvel élément de retenue.

20. Ebauche d'élément de retenue (90) destinée à être utilisée pour l'assemblage ou la réparation d'un joint construit ou assemblé selon l'une quelconque des revendications précédentes, l'ébauche comportant un anneau fait d'un matériau possédant un module d'élasticité qui se situe dans la plage de 131 000 à 207 000 MPa et présentant une configuration de section de forme générale rectangulaire ; un chanfrein d'entrée (92) ménagé sur le pourtour d'une extrémité de l'ébauche, le chanfrein étant disposé suivant un angle se situant dans la plage comprise entre 15 et 25° par rapport à l'axe de l'anneau ; une face biseautée (94) disposée au niveau de ladite extrémité et s'étendant radialement vers l'intérieur et en direction de l'autre extrémité de l'anneau entre le chanfrein (92) et le pourtour interne de l'anneau ; et plusieurs fentes orientées dans une direction sensiblement radiale (96) et s'étendant axialement depuis ladite extrémité sur une distance égale à 25 % au moins de la longueur axiale de l'anneau.

21. Ebauche selon la revendication 20, dans laquelle le matériau est un acier forgé possédant une dureté Rockwell qui se situe dans une plage de B60 à C35.

22. Ebauche selon la revendication 21, dans laquelle le matériau est un métal ferreux pulvérisé possédant une densité initiale minimale de 6,8 g/cc et une dureté Rockwell qui se situe dans la plage de B40 à B100.

9.

**Fig.1.**

**Fig.2.** **Fig.3.**

Fig_4.

Fig_5. Fig_6.

FORCE

DISPLACEMENT

Fig_7_

Fig_8_